# EUROPEAN PATENT APPLICATION

(11) **EP 4 848 362 A1**
(43) Date of publication of application: **02.12.2026**
(21) Application number: 26181815.7
(22) Date of filing: 29.05.2026
(51) Int. Cl.: H01M 4/36, H01M 4/525, H01M 4/02

(54) **NICKEL-RICH CATHODE ACTIVE MATERIALS HAVING PIEZOELECTRIC COATING, METHOD OF MANUFACTURE CATHODE ACTIVE MATERIALS, BATTERIES, AND METHOD OF OPERATING BATTERIES**

(30) Priority: 29.05.2025 US 202519222672
(71) Applicant: SAMSUNG SDI CO., LTD., Yongin-si, Gyeonggi-do 17084 (KR)
(72) Inventor: ASSELIN, Genevieve, Cambridge, 02138 (US); ZHANG, Yuxin, Cambridge, 02138 (US); MA, Yuanyuan, Cambridge, 02138 (US); KIM, Yongseok, Cambridge, 02138 (US)
(74) Representative: Maiwald GmbH

(57) **Abstract**

A piezoelectrical Ni-rich cathode active material including a nickel composite oxide core having at least about 60 mol% of nickel and a shell that includes a piezoelectric composition having a piezoelectric modulus tensor of at least about 2 picocoulomb per newton (pC/N), and a rechargeable lithium battery including the piezoelectrical Ni-rich cathode active material are provided. A method of manufacturing the piezoelectrical Ni-rich cathode active material includes providing a piezoelectric adduct to a Ni-rich composite oxide to form an intermediate and heat treating the intermediate to form the piezoelectric composition as a coating on the Ni-rich composite oxide. A method of operating the rechargeable lithium battery includes generating lattice strain in the core and transferring the lattice strain to the piezoelectric composition and inducing an electric field to inhibit oxygen from exiting the core.

## Description

### BACKGROUND

### 1. Field

One or more embodiments of the present disclosure relate to a nickel-rich cathode active material having a piezoelectric coating, and a method of preparing the nickel-rich cathode active material. One or more embodiments relate to a rechargeable lithium battery including the nickel-rich cathode active material and a method of operating the rechargeable lithium battery.

### 2. Description of the Related Art

Electric vehicles and electronic devices such as smart phones, laptops, and/or the like, use a rechargeable lithium battery having high energy density and easy portability as a driving power source. In response to the recent rapid spread of electric vehicles and electronic devices using rechargeable lithium batteries, research to develop a rechargeable lithium battery having enhanced performance characteristics (e.g., high capacity and high energy density) has been actively conducted.

Cathode active materials that have been investigated to implement rechargeable lithium batteries having enhanced performance characteristics include Ni-rich layered oxides. While large, high capacity, high voltage, and/or high energy density rechargeable lithium batteries may be implemented using Ni-rich layered oxides, the bulk-phase and surface stability of these materials is weak, for example, if (e.g., when) operated at relatively high voltage. Accordingly, there is a desire to improve the stability of the cathode active material for use in a high capacity or a high energy density rechargeable lithium battery, particularly for high voltage operating conditions.

### SUMMARY

One or more aspects of embodiments of the present disclosure are directed toward a cathode active material including a core and a shell on the core, the core including a nickel composite oxide having at least about 60 mol% nickel, based on a total moles of metals in the nickel composite oxide excluding Li, and the shell including a piezoelectric composition having a piezoelectric modulus tensor of at least about 2 picocoulomb per newton (pC/N), wherein the cathode active material is a piezoelectrical Ni-rich cathode active material.

In one or more embodiments, the piezoelectric composition may have an elastic tensor of at least about 10 gigapascal (GPa).

In one or more embodiments, the piezoelectric composition may be crystalline, ceramic, or polymeric, and may include metal composite oxides, metal compounds, organic polymers, or combinations thereof.

In one or more embodiments, the piezoelectric composition may include Li, K, Al, Ga, Nb, Pb, Sc, Ta, Ti, W, Zn, Zr, or a combination thereof.

In one or more embodiments, the piezoelectric composition may include LiGaO₃, LiNbO₃, LiTaO₃, LiIO₃, GaPO₄, KNbO₃, NaWO₃, NbTiO₃, BaTiO₃, PbTiO₃, ZnO, GaN, AlN, lead zirconate titanate (PZT), bismuth-based perovskite solid solution (BSPT), or a combination thereof.

In one or more embodiments, the nickel composite oxide may be represented by Chemical Formula 1:

**Chemical Formula 1** Liₐ₁Niₓ₁M¹_{y1}M²_{z1}M³_{y1}O_{2-b1}X_{b1}

M¹, M² and M³ may each independently be selected from among Al, B, Ba, Ca, Ce, Co, Cr, Cu, Fe, Mg, Mn, Mo, Nb, Si, Sn, Sr, Ti, V, W, and Zr,
X may be at least one element selected from among F, P, and S,
0.9≤a1≤1.2, 0.6≤x1≤0.99, 0≤y1≤0.2, 0≤z1≤0.05, 0≤w1≤0.05, 0.9≤x1+y1+z1+w1≤1.1, and 0≤b1≤0.1.

In one or more embodiments, the core includes particles, wherein an average particle diameter of the particles may be about 20 nanometer (nm) to about 2 micrometer (µm).

In one or more embodiments, the shell includes a coating, wherein a thickness of the coating may be about 0.5 nm to about 100 nm.

In one or more embodiments, an amount of the core may be about 50 wt% to about 99.5 wt%, and an amount of the shell may be about 0.5 wt% to about 50 wt%, based on a total weight of the cathode active material.

In one or more embodiments, a weight ratio of the shell to the core may be about 1:200 to about 1:1.

One or more aspects of embodiments of the present disclosure are directed toward a method including a) providing a piezoelectric adduct to a Ni-rich composite oxide to form an intermediate, and b) heat treating the intermediate to form a coating on the Ni-rich composite oxide, the coating including a piezoelectric composition, wherein the method is a method of manufacturing a piezoelectrical Ni-rich cathode active material.

In one or more embodiments of the method, the Ni-rich composite oxide may be an unwashed oxide having a surface including a lithium residue, wherein providing the piezoelectric adduct to the Ni-rich composite oxide to form the intermediate may include a) providing the unwashed oxide, and b) forming the intermediate from the piezoelectric adduct and the unwashed oxide, and wherein providing the unwashed oxide may include a.1) heat treating a composite oxide precursor and excluding washing to form the unwashed oxide, or a.2) providing a pre-formed composite oxide and excluding washing.

In one or more embodiments of the method, the piezoelectric adduct may include an oxide of Ga, Nb, Ta, I, W, Sc, Ti, Zn, Zr, or a combination thereof.

In one or more embodiments of the method, the piezoelectric adduct may include gallium oxide, niobium oxide, tantalum oxide, periodate, iodate, or a combination thereof.

In one or more embodiments of the method, the intermediate may be heat treated at a temperature of about 400 °C to about 900 °C, and for about 2 hours (h) to about 48 h.

One or more aspects of embodiments of the present disclosure are directed toward a battery including a positive electrode including the cathode active material described herein, a negative electrode, and an electrolyte between the positive electrode and the negative electrode.

In one or more embodiments, a method of operating the battery may include generating lattice strain in the core and transferring the lattice strain to the piezoelectric composition, and inducing an electric field to inhibit oxygen from exiting the core.

In one or more embodiments, the method of operating the battery may include operating the battery between about 2.5 volt (V) and about 4.8 V, and at a Crate of about 0.2 C to about 10 C, wherein an amount of oxygen released from the battery may be at least about 50% less than an amount of oxygen released during operating a battery including a cathode active material that excludes the piezoelectric composition.

In one or more embodiments, the method of operating the battery may include operating the battery for about 100 cycles to about 500 cycles, and a capacity retention of the battery may be at least about 75%.

In one or more embodiments, the method of operating the battery may include operating the battery between about 2.5 V and about 4.8 V for about 50 cycles to about 300 cycles, and a capacity retention of the battery may be about 70% to about 95%.

Additional aspects of embodiments will be set forth in part in the description which follows and, in part, will be apparent from the description, or may be learned by practice of the presented embodiments of the disclosure.

The cathode active material according to one or more embodiments may have high charge capacity and energy density and improved stability if (e.g., when) included in a rechargeable lithium battery operated at high voltage conditions.

### BRIEF DESCRIPTION OF THE DRAWINGS

The preceding and other objects and features of embodiments of the present disclosure will become more apparent to those of ordinary skill in the art by describing example embodiments thereof in more detail with reference to the accompanying drawings. In the drawings:
FIG. 1 is a cutaway perspective view schematically showing a rechargeable lithium battery according to one or more embodiments.
FIG. 2 is a cross-sectional view schematically showing a rechargeable lithium battery according to one or more embodiments.
FIG. 3 and FIG. 4 are perspective views schematically showing rechargeable lithium batteries according to one or more embodiments.

### DETAILED DESCRIPTION

In order to sufficiently understand the configuration and effect of embodiments of the present disclosure, example embodiments of the present disclosure will be described in more detail with reference to the accompanying drawings, and may be easily practiced by a person skilled in the art. However, it should be noted that this is provided by way of example, and the present disclosure is not limited thereby and is only defined by the scope of the appended claims, and equivalents thereof, described in more detail herein. Rather, the example embodiments are provided only to disclose the subject matter of the present disclosure and let those skilled in the art fully know the scope of the present disclosure.

In the drawings, the thickness of layers, films, panels, regions, and/or the like, may be exaggerated for clarity and like reference numerals designate like elements throughout, and duplicative descriptions thereof may not be provided in the specification. Unless stated otherwise in the specification, if a portion of a layer, film, region, plate and/or the like is referred to as being "on" another portion, this includes not only the case in which the portion is "directly on" another portion but also the case in which there is another portion interposed therebetween.

Unless stated otherwise in the specification, singular expressions may include plural expressions. Also, unless stated otherwise, "A or B" may refer to "including A, including B, or including A and B."

In the specification, a "combination thereof" may refer to a mixture, laminate, composite, copolymer, alloy, blend, and/or reaction product of constituents.

The terms "comprises","comprising", "comprise", "including", "includes", "include", "having", "has", and "have", as used in this description, are intended to designate the presence of an embodied aspect, number, act, task, element, and/or a (e.g., any suitable) combination thereof. However, the use of these terms does not preclude or exclude the possibility of the presence or addition of one or more other components, features, numbers, acts, tasks, elements, and/or a (e.g., any suitable) combination thereof.

In one or more embodiments, the term "layer" as used herein includes not only a shape formed or provided on the whole surface if viewed from a plan view, but also a shape formed or provided on a partial surface.

It will be understood that, although the terms "first", "second"," "third", and/or the like may be utilized herein to describe one or more suitable elements, components, regions, layers and/or sections, these elements, components, regions, layers and/or sections should not be limited by these terms. These terms are only utilized to distinguish one element, component, region, layer or section from another element, component, region, layer, or section. Thus, a first element, component, region, layer, or section described herein may be termed a second element, component, region, layer or section without departing from the teachings set forth herein.

As utilized herein, the term "and/or" includes any, and all, combinations of one or more of the associated listed items. Expressions such as "at least one of", "one of", and "selected from", if preceding a list of elements, modify the entire list of elements and do not modify the individual elements of the list. For example, the expressions "at least one of a to c", "at least one of a, b or c", and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

Spatially relative terms, such as "beneath"," "below", "lower", "above", "upper", and/or the like, may be utilized herein to easily describe the relationship between one element or feature and another element or feature. It will be understood that the spatially relative terms are intended to encompass different orientations of a device in utilization or operation in addition to the orientation illustrated in the drawings. For example, if the device in the drawings is turned over, elements described as "below" or "beneath" other elements or features will be oriented "above" the other elements or features. Thus, the example term "below" can encompass both (e.g., simultaneously) the orientations of above and below. The device may be otherwise oriented (rotated 90 degrees or at other orientations), and the spatially relative terms utilized herein may be interpreted accordingly.

Unless otherwise defined, all terms (including chemical, technical and scientific terms) utilized herein have the same meaning as commonly understood by one of ordinary skill in the art to which this disclosure pertains. It will be further understood that terms, such as those defined in commonly utilized dictionaries, should be interpreted as having a meaning that is consistent with their meaning in the context of the related art and the present disclosure, and will not be interpreted in an idealized or overly formal sense.

Example embodiments may be described herein with reference to cross-sectional views, which are schematic views of idealized embodiments. As such, variations from the shapes of the illustrations as a result, for example, of manufacturing techniques and/or tolerances, are to be expected. Thus, embodiments described herein should not be construed as being limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the drawings are schematic in nature and their shapes are not intended to illustrate the precise shape of a region and are not intended to limit the scope of the appended claims.

The term "may" will be understood to refer to "one or more embodiments of the present disclosure", some of which include the described element and some of which exclude that element and/or include an alternate element. Similarly, alternative language such as "or" refers to "one or more embodiments of the present disclosure", each including a corresponding listed item. Descriptions of features or aspects within each embodiment should typically be considered as available for other similar features or aspects in other embodiments.

Further, in this specification, the phrase "plan view", indicates viewing a target portion from the top, and the phrase "on a cross-section" indicates viewing a cross-section formed by vertically cutting a target portion from the side.

In the context of the present application and unless otherwise defined, the terms "use", "using", and "used" may be considered synonymous with the terms "utilize", "utilizing", and "utilized", respectively.

The term "particle diameter" as utilized herein refers to an average diameter of particles if the particles are spherical, and refers to an average major axis length of particles if the particles are non-spherical. For example, the average particle diameter may be measured by any suitable method in the art, for example, by a particle size analyzer, and/or by a transmission electron microscopic image and/or a scanning electron microscopic image. A value for the average particle diameter may be obtained by performing dynamic light scattering analysis methodology, performing data analysis, counting the number of particles for each particle size range, and calculating the data obtained. Unless otherwise defined, the average particle diameter may refer to the diameter (D₅₀) of particles having a cumulative volume of 50 volume% in the particle size distribution. If measuring by laser diffraction, for example, the particles to be measured are dispersed in a dispersion medium and then introduced into a related art laser diffraction particle size measuring device (e.g., MT 3000 available from Microtrac, Ltd.) utilizing ultrasonic waves at about 28 kHz, and after irradiation with an output of 60 W, the average particle diameter (D50) based on 50% of the particle size distribution in the measuring device may be calculated. As utilized herein, if (e.g., when) a definition is not otherwise provided, the average particle diameter refers to a diameter (D₅₀) of particles having a cumulative volume of 50 volume% in the particle size distribution that is obtained by measuring the size (diameter or major axis length) of about 20 particles at random in a scanning electron microscopic image.

The following description includes non-limiting examples of values for quantities that are a part of the present disclosure. The example values are described as example ranges for the quantities and it will be understood that any and all of the following example ranges may include any sub-range beginning and/or ending with any value thereof. An example range of "about 60% to about 80%" may also include, for example, about 60.0% to about 75%, about 68% to about 80.0%, about 68% to about 72%, about 69.5% to about 70.5%, about 70.0%, and about 70%.

### Cathode Active Material

A cathode active material according to one or more embodiments of the present disclosure includes a core that may be or include a nickel composite oxide and a shell on the core. The nickel composite oxide includes at least about 60 mol% nickel, based on a total moles of metals in nickel composite oxide excluding Li. The shell may be or include a piezoelectric composition having a piezoelectric modulus tensor (PMT) of at least about 2 picocoulomb per newton (pC/N). The cathode active material may be referred to as a piezoelectrical Ni-rich cathode active material. The nickel composite oxide of the present disclosure may be a layered nickel-rich composite oxide having a high charge capacity greater than about 180 milliampere hour per gram (mAh/g) at a charged state of at least about 4.5 volt (V) and is a suitable cathode active material for use in a high energy density battery. The high charge capacity results from redox reactions of Ni and/or Co cations that oxidize the lattice oxygen of the nickel composite oxide present as oxide anion (O²⁻) to form an oxidized oxide O^{α} having a charge "α" that is less negative than -2. For example, the oxidized oxide O^{α} may include peroxide-like anions and/or superoxide-like anions. The oxidation of O²⁻ is facilitated at high voltages and increases the mobility of the oxidized oxide O^{α} such that lattice oxygen is more readily released (e.g., lost) from the interior of the nickel composite oxide. Sustained release (e.g., loss) of the lattice oxygen causes irreversible transformations and/or surface side reactions that degrade the structure and/or charge capacity of the nickel composite oxide, and such degradation may reduce cycle life and/or performance characteristics of a battery that utilizes the cathode active material. For at least the preceding reasons, the nickel composite oxide may have poor material stability, e.g., at greater than about 4.4 V. For example, the nickel composite oxide may be irreversibly transformed into a rock salt compound (e.g., NiO) that is electrochemically inert and/or insulating.

The cathode active material has lithium ions (Li⁺) that intercalate into the cathode active material during the discharge process of a rechargeable lithium battery. For example, the amount of lithium ions (Li⁺) in the cathode active material may be greatest if (e.g., when) the battery is fully discharged and this amount decreases during the charging process as lithium ions (Li⁺) are released from the cathode (positive electrode) by delithiation and enter the anode (negative electrode) by lithiation. The delithiation /lithiation processes generate stress in the nickel composite oxide (e.g., along grain boundaries) and a piezoelectric composition on the surface of the nickel composite oxide may respond to transfer of the stress. The term "piezoelectricity" as used herein, refers to the electric charge that is generated in a material, (e.g., a solid material) in response to an applied stress such as mechanical stress, pressure, latent heat, and/or the like. Transfer of the stress to a piezoelectric composition on the surface of the nickel composite oxide may result in structural deformation (e.g., of the lattice) of the piezoelectric composition and induction of an electric field. Electrical charge of the electric field may prevent, suppress, or reduce the oxidized oxide O^{α} from moving outside (e.g., beyond) a grain boundary (e.g., surface) of the nickel composite oxide such that the release (e.g., loss) of the lattice oxygen from the interior of the nickel composite oxide is prevented, suppressed, or reduced. Efficiency for the process of electric field induction by the piezoelectric composition may be more suitable for a piezoelectric composition that is lattice-compatible with the nickel composite oxide. The term "lattice-compatible" as used herein, refers to two or more materials having substantially similar lattice parameters and experience negligible strain anisotropy at the interface of the crystal lattices of the materials (e.g., during charging/discharging and/or delithiation/lithiation processes of a rechargeable battery). In embodiments of the present disclosure, stress in the nickel composite oxide is removed by a lattice-compatible piezoelectric composition at the surface and triggers a piezoelectric effect to induce an electric field that prevents, suppresses, or reduces release (e.g., loss) of the lattice oxygen.

### Piezoelectric Composition

The piezoelectric composition of embodiments of the present disclosure has a piezoelectric modulus tensor (PMT) that determines an amount of polarization that is induced in the piezoelectric composition in response to an applied stress. For example, the amount of polarization may be determined by an amount of strain produced by the applied stress and, also, by an amount of charge redistribution that occurs in the piezoelectric composition due to the produced strain. The PMT is set or determined by characteristics of the piezoelectric composition that may include a piezoelectric tensor (Tp) and an elastic tensor (Te). A greater PMT is generally observed in materials having a greater piezoelectric tensor (Tp) and in softer (less rigid) materials having a smaller elastic tensor (Te). According to one or more embodiments, the amount of polarization induced in the piezoelectric composition in response to applied stress may be greater for larger values of the piezoelectric modulus tensor (PMT) of the piezoelectric composition. The piezoelectric modulus tensor (PMT) of the piezoelectric composition may be about 2 picocoulomb per newton (pC/N) to about 2000 pC/N, about 2 pC/N to about 1000 pC/N, about 5 pC/N to about 800 pC/N, about 5 pC/N to about 500 pC/N, about 5 pC/N to about 300 pC/N, about 5 pC/N to about 100 pC/N, or about 5 pC/N to about 50 pC/N.

According to one or more embodiments, the amount of polarization induced in the piezoelectric composition in response to applied stress may be greater for smaller values of the elastic tensor (Te), but if (e.g., when) comparing materials with comparable piezoelectric tensor (Tp) values, more polarization may be induced in the material that is relatively softer (less rigid). The elastic tensor (Te) of the piezoelectric composition may be at least about 10 gigapascal (GPa). For example, the elastic tensor (Te) may be about 10 GPa to about 500 GPa, about 10 GPa to about 400 GPa, about 20 GPa to about 300 GPa, about 20 GPa to about 250 GPa, about 40 GPa to about 250 GPa, about 20 GPa to about 150 GPa, about 20 GPa to about 100 GPa, about 10 GPa to about 200 GPa, about 10 GPa to about 150 GPa, about 10 GPa to about 100 GPa, or about 10 GPa to about 80 GPa.

The piezoelectric composition according to one or more embodiments may be crystalline, ceramic, or polymeric, and may include metal composite oxides, metal compounds, organic polymers, or a (e.g., any suitable) combination thereof. The metal compounds may refer metal halide, metal nitride, metal sulfide, metal oxyanion salt, or combination thereof. The piezoelectric composition according to one or more embodiments may include Li, K, Al, Ga, Nb, Pb, Sc, Ta, Ti, W, Zn, Zr, or a (e.g., any suitable) combination thereof and at least one anion that may be halide, nitride, oxide, sulfide, an oxyanion, or a (e.g., any suitable) combination thereof. For example, the oxyanions may include F, CI, Br, I, P, S, N and/or the like, and may be periodate, iodate, chlorate, phosphate, sulfate, and/or the like. The piezoelectric composition according to one or more embodiments may include at least one lithium composite oxide. The piezoelectric composition according to one or more embodiments may be lead zirconate titanate (PZT, Pb[ZrₘTi₁₋ₘ]O₃, (0 ≤ m ≤ 1)), bismuth-based perovskite solid solution (BSPT,100-n•(BiScO₃)-n(PbTiO₃)), or a (e.g., any suitable) combination thereof. The BSPT may, for example, be BSPT66, which contains 66 mol% PbTiO₃.

The piezoelectric composition according to one or more embodiments may be or include LiGaO₃, LiNbO₃, LiTaO₃, LiIO₃, GaPO₄, KNbO₃, NaWO₃, NbTiO₃, BaTiO₃, PbTiO₃, ZnO, GaN, AlN, lead zirconate titanate (PZT), bismuth-based perovskite solid solution (BSPT), or a (e.g., any suitable) combination thereof. For example, the piezoelectric composition may be at least one selected from among LiGaO₃, LiNbO₃, LiTaO₃, and LiIO₃.

In one or more embodiments, the shell of the cathode active material may be in the form of or include a coating that includes the piezoelectric composition. The coating and/or the shell may be around or surround the nickel composite oxide and/or the core partially or entirely. The coating may have the added features of high ionic conductivity to allow suitable transfer rate of lithium ions (Li⁺), electronic insulation to reduce side reactions with the electrolyte, and a mechanical barrier to structural degradation, surface side reactions, and ambient (e.g., oxidative) conditions to enhance or improve handling and processing conditions of the cathode active material. The piezoelectric composition in the coating may be lattice-compatible with the nickel composite oxide to provide a substantially uniform interface therebetween. The coating and/or the piezoelectric composition may surround and protect the nickel composite oxide from structural deterioration and/or degradation that would otherwise occur substantially or predominately at the surface of the cathode active material.

Use of the cathode active material having the coating that includes the piezoelectric composition of embodiments of the present disclosure in a high voltage battery may improve stability and cycle-life characteristics while maximizing or increasing charge capacity and energy density.

### Nickel Composite Oxide

The nickel composite oxide of embodiments of the present disclosure has a high cutoff voltage and a low cutoff voltage that are maximum and minimum values, respectively, of a suitable voltage range at which a battery including the nickel composite oxide should be operated. The low cutoff voltage may be at least about 2.5 V, and the high cutoff voltage may be at most about 5 V. The nickel composite oxide may be lithiated and delithiated to at least about 80% to about 95% of theoretical capacity if (e.g., when) fully discharged and charged, respectively. In one or more embodiments, the nickel composite oxide may be a layered nickel composite oxide and may include the elements nickel, oxygen, and at least one added element selected from among metals, metalloids, and non-metals. For example, the nickel composite oxide may include from about one to about five added elements that may be aluminum (Al), boron (B), cobalt (Co), iron (Fe), magnesium (Mg), manganese (Mn), titanium (Ti), tungsten (W), or a (e.g., any suitable) combination thereof. In one or more embodiments, the nickel composite oxide may be at least one selected from among a lithium nickel composite oxide, a lithium nickel-cobalt-aluminum composite oxide (NCA-based composite oxide), and a lithium nickel-manganese-cobalt-based composite oxide (NMC-based composite oxide). Herein, the term "based composite oxide", is a cathode active material (CAM) oxide material that may include elements (e.g., metal elements) in addition to the elements in the name of the CAM. In one or more embodiments, the nickel composite oxide may be lithium nickel oxide (LiNiO₂), lithium nickel cobalt aluminum oxide (NCA) (LiNiCoAlO₂), lithium nickel manganese cobalt oxide (NMC) (LiNiCoMnO₂), or a (e.g., any suitable) combination thereof. For example, the nickel composite oxide may be at least one selected from among LiNi_{0.85}Co_{0.10}Mn_{0.05}O₂ (NCM 851005), LiNi_{0.8}Co_{0.1}Mn_{0.1}O₂ (NCM 811), LiNi_{0.6}Co_{0.2}Mn_{0.2}O₂ (NCM 622), and LiNi_{0.94}Co_{0.05}Te_{0.01}O₂.

In one or more embodiments, the nickel composite oxide may have an amount of nickel of about 60 l% to about 98 mol%, about 65 mol% to about 95 mol%, or about 68 mol% to about 90 mol%, based on a total weight of the nickel composite oxide. In one or more embodiments, the nickel composite oxide may be a nickel-rich composite oxide having an amount of nickel of about 72 mol% to about 99 mol%, about 74 mol% to about 98 mol%, about 75 mol% to about 95 mol%, about 78 mol% to about 92 mol%, or about 79 mol% to about 90 mol%, based on a total moles of metals in the nickel composite oxide excluding Li.

In one or more embodiments, the nickel composite oxide may be represented by, for example, Chemical Formula 1.

**Chemical Formula 1** Liₐ₁Niₓ₁M¹_{y1}M²_{z1}M³_{w1}O_{2-b1}X_{b1}

In Chemical Formula 1, M¹, M² and M³ may each independently be selected from among aluminum (Al), boron (B), barium (Ba), calcium (Ca), cerium (Ce), cobalt (Co), chromium (Cr), copper (Cu), iron (Fe), magnesium (Mg), manganese (Mn), molybdenum (Mo), niobium (Nb), silicon (Si), tin (Sn), strontium (Sr), titanium (Ti), vanadium (V), tungsten (W), tantalum (Ta), zirconium (Zr), or a combination thereof; X may be at least one element selected from among fluorine (F), phosphorous (P), sulfur (S), or a combination thereof; 0.9 ≤ a1 ≤ 1.2, 0.6 ≤ x1 ≤ 0.99, 0 ≤ y1 ≤ 0.2, 0 ≤ z1 ≤ 0.05, 0 ≤ w1 ≤ 0.05, 0.9 ≤ x1 +y1 +z1 +w1 ≤ 1.1, and 0 ≤ b1 ≤ 0.1. For example, the nickel composite oxide may have a1 of about 1 and x1 may be a real number of about 0.6 to about 0.99. In one or more embodiments, the nickel-rich composite oxide may have a1 of about 1 and x1 may be a real number of about 0.72 to about 0.99, or about 0.79 to about 0.90.

Use of the cathode active material having the nickel composite oxide satisfying at least one of the preceding ranges in a high voltage battery may improve stability and cycle-life characteristics while maximizing or increasing charge capacity and energy density.

The core that includes the nickel composite oxide according to one or more embodiments may be in the form of particles. The particles may have an average particle diameter of about 20 nanometer (nm) to about 2 micrometer (µm). In one or more embodiments, an average particle diameter (D₅₀) of the particles may be, for example, about 20 nm to about 2.5 µm. As an example, the core that includes the nickel composite oxide may be large particles having an average particle diameter (D₅₀) of about 9 µm to about 25 µm, or may be small particles having an average particle diameter (D₅₀) of about 0.5 µm to about 8 µm, or the large particles and small particles may be appropriately or suitably mixed. The average particle diameter (D₅₀) of the large particles may be, for example, about 10 µm to about 20 µm, about 12 µm to about 18 µm, or about 13 µm to about 16 µm, and the average particle diameter (D₅₀) of the small particles may be, for example, about 1 µm to about 6 µm, or about 1 µm to about 3 µm. If (e.g., when) the cathode active material includes a mixture of large and small particles, the large particles may be included in an amount of about 60 wt% to about 95 wt%, or about 20 wt% to about 60 wt%, and the small particles may be included in an amount of about 60 wt% to about 95 wt%, or about 20 wt% to about 60 wt%, based on a total weight of the core that includes the nickel composite oxide. The shape of the particles and/or the core may each independently be selected from among irregular, spherical, semi-spherical, and ellipsodial.

Use of the nickel composite oxide as particles having an average particle diameter (D₅₀) satisfying at least one of the preceding ranges in a high voltage battery may improve stability and cycle-life characteristics while maximizing or increasing charge capacity and energy density.

The shell including the piezoelectric composition according to one or more embodiments may be on the surface of the particles and may be in the form of the coating as described elsewhere herein. For example, the shell and/or the coating may surround the entire particle surface, and may, for example, be in the form of a film that continuously surrounds the particle surface. A thickness of the shell and/or the coating according to one or more embodiments may be about 5% to about 30% of the average particle diameter (D₅₀) of the particles. For example, the thickness of the shell and/or the coating may be about 0.5 nanometer (nm) to about 100 nm, about 0.7 nm to about 90 nm, about 0.7 nm to about 70 nm, about 1 nm to about 50 nm, about 1 nm to about 30 nm, about 1 nm to about 20 nm, about 2 nm to about 20 nm, about 2 nm to about 15 nm, about 2 nm to about 10 nm, about 1 nm to about 8 nm, about 2 nm to about 6 nm, or about 5 nm to about 10 nm. In one or more embodiments, a thickness of the shell and/or the coating of the large particles may be about 1 nm to about 8 nm, or about 1 nm to about 5 nm, or about 5 nm to about 10 nm, and a thickness of the shell and/or the coating of the small particles may be about 0.5 nm to about 5 nm, or about 0.5 nm to about 4 nm, or about 5 nm to about 10 nm. If (e.g., when) the thickness of the shell and/or the coating is within the described ranges, the structural stability of the cathode active material may be improved without reducing capacity, and degradation of the cathode active material may be eliminated (e.g., effectively suppressed or reduced). The thickness of the shell and/or the coating may be measured using, (e.g., time-of-flight secondary-ion mass spectrometry (TOF-SIMS), X-ray photoelectron spectroscopy (XPS), and/or energy-dispersive X-ray spectroscopy (EDS) analysis), and the thickness range of the shell may be measured through transmission electron microscopy-energy dispersive X-ray spectroscopy (TEM-EDS) line profile analysis. In one or more embodiments, the shell and/or the coating has a substantially uniform thickness.

Use of the piezoelectric composition in the form of the coating on the surface of the particles in a high voltage battery may improve stability and cycle-life characteristics while maximizing or increasing charge capacity and energy density.

In one or more embodiments, an amount of the core may be about 5 wt% to about 99.9 wt%, about 10 wt% to about 99.5 wt%, about 30 wt% to about 97 wt%, about 50 wt% to about 96 wt%, about 60 wt% to about 95 wt%, about 65 wt% to about 95 wt%, about 50 wt% to about 85 wt%, about 70 wt% to about 95 wt%, about 75 wt% to about 95 wt%, about 80 wt% to about 99 wt%, about 90 wt% to about 99 wt%, or about 95 wt% to about 99 wt% based on a total weight of the cathode active material. In one or more embodiments, an amount of the nickel composite oxide may be about 5 wt% to about 99 wt%, about 10 wt% to about 98 wt%, about 30 wt% to about 97 wt%, about 50 wt% to about 96 wt%, about 65 wt% to about 95 wt%, about 65 wt% to about 85 wt%, about 70 wt% to about 95 wt%, about 75 wt% to about 95 wt%, about 80 wt% to about 99 wt%, about 90 wt% to about 99 wt%, or about 90 wt% to about 99 wt% based on a total weight of the cathode active material. In one or more embodiments, an amount of the shell and/or the coating may be about 0.1 wt% to about 95 wt%, about 0.5 wt% to about 90 wt%, about 3 wt% to about 70 wt%, about 1 wt% to about 50 wt%, about 5 wt% to about 40 wt%, about 5 wt% to about 35 wt%, about 15 wt% to about 50 wt%, about 5 wt% to about 30 wt%, about 5 wt% to about 25 wt%, about 1 wt% to about 20 wt%, about 1 wt% to about 10 wt%, or about 1 wt% to about 5 wt% based on a total weight of the cathode active material. In one or more embodiments, an amount of the piezoelectric composition may be about 1 wt% to about 95 wt%, about 2 wt% to about 90 wt%, about 3 wt% to about 70 wt%, about 4 wt% to about 50 wt%, about 5 wt% to about 35 wt%, about 15 wt% to about 35 wt%, about 5 wt% to about 30 wt%, about 5 wt% to about 25 wt%, about 1 wt% to about 20 wt%, about 1 wt% to about 10 wt%, or about 1 wt% to about 5 wt% based on a total weight of the cathode active material.

In one or more embodiments, the amount of the core may be about 50 wt% to about 99.5 wt%, and the amount of the shell may be about 0.5 wt% to about 50 wt%, based on a total weight of the cathode active material.

In one or more embodiments, a weight ratio of the shell and/or the coating to the core may be about 1:200 to about 1:1, for example, about 1:30 to about 1:1, about 1:20 to about 1:1, about 1:10 to about 1:1, about 1:5 to about 1:1, or about 1:3 to about 1:1, about 1:30 to about 1:2, about 1:30 to about 1:5, about 1:30 to about 1:10, or about 1:30 to about 1:20.

A volumetric expansion ratio of the cathode active material according to one or more embodiments may be, at most, about 1% to about 15%. Herein, "volumetric expansion ratio" is a volume of the discharged cathode active material divided by a volume of the charged cathode active material, "discharged" refers to a state of at least 85%, at least 90%, at least 95%, or 100% discharge, and "charged" refers to a state of at least 85%, at least 90%, at least 95%, or 100% charged. For example, the volumetric expansion ratio of the cathode active material may be about 1% to about 15%, about 2% to about 10%, or about 3% to about 8%. In one or more embodiments, a volumetric expansion ratio of each of the core, the shell, the coating, the nickel composite oxide, and the piezoelectric composition may be, at most, about 1% to about 15%, (e.g., about 2% to about 10%, about 3% to about 8%).

### Method of Manufacturing a Piezoelectrical Ni-rich Cathode Active Material

One or more embodiments of the present disclosure are directed to methods of manufacturing a piezoelectrical Ni-rich cathode active material. The methods include the act or task of providing a piezoelectric adduct to a Ni-rich composite oxide to form an intermediate. In one or more embodiments, the Ni-rich composite oxide may be an unwashed oxide having a surface including a lithium residue. For example, a process may include providing a Ni-containing compound, at least one other metal compound, a lithium compound (lithium salt), and a solvent to form a mixture that may be subjected to a grinding process (e.g., through ball milling), evaporated (e.g., to dryness), and heat treated (e.g., under vacuum) at a temperature between 100 °C and 160 °C to provide a composite oxide precursor as a dried mixture. The dried mixture of the composite oxide precursor may be heat treated (e.g., calcination process) at a temperature between 500 °C and 1000 °C for at least about 4 h to about 15 h to form (provide) the unwashed oxide as a resultant product. Excluding a washing of the resultant product may form (provide) the unwashed oxide having a lithium residue on a surface thereof. In some embodiments, the resultant product may be ground to obtain the Ni-rich composite oxide in the form of the particles as described elsewhere herein. In one or more embodiments, the unwashed oxide may be provided as a pre-formed composite oxide that has been heat treated (e.g., calcination process) and has not been washed to have a lithium residue on a surface thereof. In some embodiments, the pre-formed composite oxide may be ground to obtain the Ni-rich composite oxide in the form of the particles as described elsewhere herein.

The piezoelectric adduct may refer to a material that inherently possesses piezoelectricity or to a raw material that does not initially exhibit piezoelectricity but can be converted into a piezoelectric compound during the manufacture of cathode active materials in accordance with embodiments of the present disclosure. The piezoelectric adduct according to one or more embodiments may be or include a metal oxide and/or a metal oxyanion. Non-limiting examples of the piezoelectric adduct include oxides and oxyanions of Ga, Nb, Ta, W, Sc, Ti, Zn, Zr, or a combination thereof. For example, the oxyanions may include F, Cl, Br, I, P, S, N and/or the like, and may be periodate, chlorate, phosphate, sulfate, and/or the like. In one or more embodiments the piezoelectric adduct may be at least one selected from gallium oxide, niobium oxide, tantalum oxide, iodate, and periodate.

In one or more embodiments, the intermediate may be formed from the piezoelectric adduct and the unwashed oxide. For example, using gallium oxide as the piezoelectric adduct may initiate a reaction between lithium in the lithium residue and the gallium oxide to produce the intermediate that includes a first lithium gallium species. In some embodiments, the Ni-rich composite oxide may be a washed oxide having a surface excluding a lithium residue. For example, after the composite oxide precursor is heat treated, a washing process may be included to form (provide) the washed oxide having no lithium residue on a surface thereof. In some embodiments, the washed oxide may be ground to obtain the Ni-rich composite oxide in the form of the particles as described elsewhere herein. The washed oxide may be provided to a lithium-containing piezoelectric adduct that includes any of the preceding metal oxides and/or metal oxyanions, as described for the piezoelectric adduct, and further includes lithium. The intermediate may be formed from the lithium-containing piezoelectric adduct and the washed oxide. For example, using lithium gallium oxide as the lithium-containing piezoelectric adduct may initiate a reaction with the Ni-rich composite oxide to produce the intermediate that includes a second lithium gallium species. For example, the second lithium gallium species of the intermediate may be substantially the same, or may be different, than the first lithium gallium species of the intermediate.

The methods include the act or task of heat treating the intermediate to form a coating on the Ni-rich composite oxide. For example, the intermediate may include the first lithium gallium species or the second lithium gallium species and may be heat treated at a temperature of about 400 °C to about 900 °C, and for about 2 h to about 48 h. The coating formed by heat treating includes a piezoelectric composition and the Ni-rich composite oxide may be the nickel composite oxide as described elsewhere herein.

### Cathode

In one or more embodiments, a cathode includes a cathode current collector and a cathode active material layer on the cathode current collector, wherein the cathode active material layer includes the preceding cathode active material as described herein. The cathode active material layer may be arranged on at least one surface (e.g., on one or two opposing surfaces) of the cathode current collector. The cathode active material layer may further include other kinds of cathode active materials in addition to the preceding cathode active material as described herein. In embodiments, the cathode active material layer may optionally further include a binder, a conductive material (e.g., an electrically conductive material), and/or a (e.g., any suitable) combination thereof.

According to one or more embodiments, a loading level of the cathode active material layer may be about 10 milligram per square centimeter (mg/cm²) to about 40 mg/cm², for example, about 10 mg/cm² to about 30 about mg/cm², or about 10 mg/cm² to about 20 mg/cm². In embodiments, a density of the cathode active material layer in the final compressed cathode may be about 3.3 gram per cubic centimeter (g/cc) to about 3.8 g/cc, for example, about 3.3 g/cc to about 3.6 g/cc or about 3.4 g/cc to about 3.58 g/cc. If applying the cathode active material according to one or more embodiments, a cathode that satisfies the loading level and density in the described ranges is suitable for implementing a high-capacity, high-energy-density rechargeable lithium battery.

### Cathode Current Collector

The cathode current collector may be formed in the form of a plate, a foil, and/or the like including (e.g., consisting of), for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and/or an alloy thereof. A thickness of the cathode current collector may be in a range of, for example, about 1 micrometer (µm) to about 100 µm, about 1 µm to about 50 µm, about 5 µm to about 25 µm, or about 10 µm to about 20 µm.

### Binder

The binder improves binding properties of cathode active material particles with one another and with a current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

### Conductive Material

The conductive material is included to provide electrical conductivity and any suitable electrically conductive material may be used as a conductive material unless it causes an undesirable chemical change in the rechargeable lithium battery. Examples of the conductive material may include a carbon-based material such as natural graphite, artificial graphite, carbon black, acetylene black, ketjen black, a carbon fiber, a carbon nanofiber, a carbon nanotube, and/or the like; a metal-based material of a metal powder and/or a metal fiber including copper, nickel, aluminum, silver, and/or the like; an electrically conductive polymer such as a polyphenylene derivative; and/or a (e.g., any suitable) mixture thereof.

Each content (e.g., amount) of the binder and the conductive material may be about 0.5 wt% to about 5 wt% based on 100 wt% of the cathode active material layer.

### Rechargeable Lithium Battery

Some embodiments of the present disclosure provide a battery that includes the preceding cathode as described herein, an anode, and an electrolyte between the cathode and the anode. As an example, the battery may be a rechargeable lithium battery which may include a positive electrode (cathode), a negative electrode (anode), a separator between the positive electrode (cathode) and the negative electrode (anode), and an electrolyte. The electrolyte of the rechargeable lithium battery may include an electrolyte solution as described elsewhere herein. In some embodiments, the rechargeable lithium battery may be a solid-state (e.g., all-solid) rechargeable lithium battery. The battery according to one or more embodiments of the present disclosure may be applied in vehicles, electric vehicles, mobile phones, suitable electrical devices, and/or the like but the present disclosure is not limited thereto.

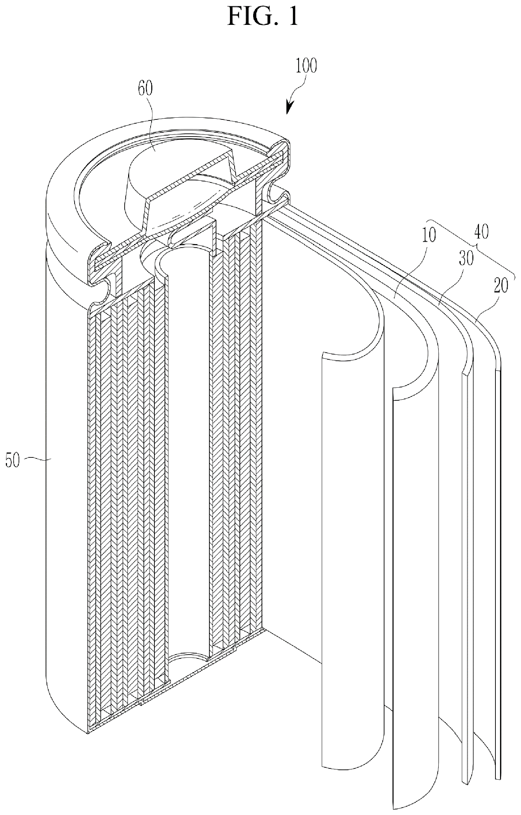

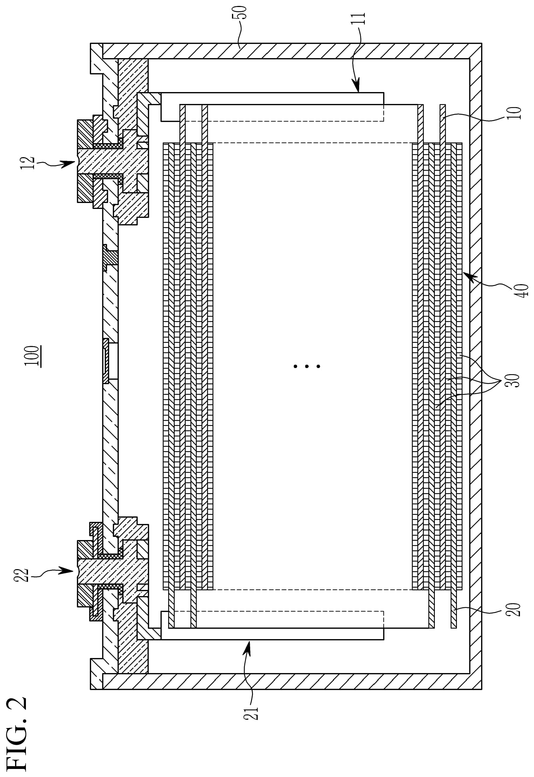

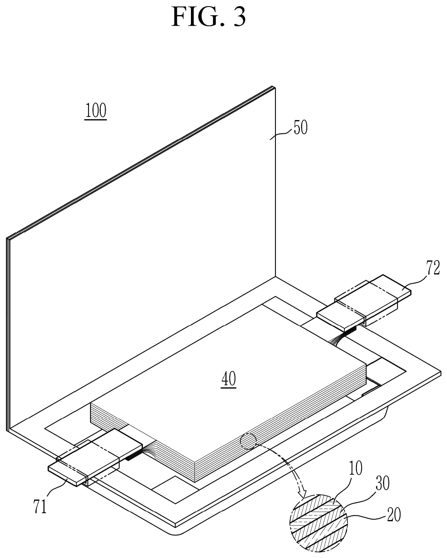

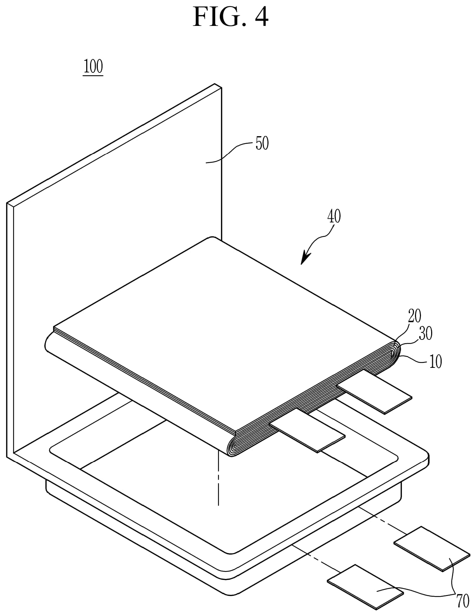

The rechargeable lithium battery may be classified into cylindrical, prismatic, pouch, coin, and/or the like, depending on the shape of the rechargeable lithium battery. FIGS. 1-4 are schematic diagrams showing the rechargeable lithium battery according to one or more embodiments, where FIG. 1 is a cylindrical battery, FIG. 2 is a prismatic battery, and FIGS. 3-4 are each a pouch-shaped battery. Referring to FIGS. 1-4, the rechargeable lithium battery 100 includes an electrode assembly 40 with a separator 30 between the positive electrode (cathode) 10 and the negative electrode (anode) 20, and a case 50 in which the electrode assembly 40 is housed. The positive electrode (cathode) 10, the negative electrode (anode) 20, and the separator 30 may be impregnated with an electrolyte. The rechargeable lithium battery 100 may include a sealing member 60 that seals the case 50 as shown in FIG. 1. In FIG. 2, the rechargeable lithium battery 100 may include a positive electrode (cathode) lead tab 11, a positive electrode terminal 12, a negative electrode (anode) lead tab 21, and a negative electrode terminal 22. As shown in FIGS. 3-4, the rechargeable lithium battery 100 includes electrode tabs 70, that may be a positive electrode (cathode) tab 71 and a negative electrode (anode) tab 72, that serves as an electrical path for inducing the current formed in the electrode assembly 40 to the outside.

The rechargeable lithium battery according to one or more embodiments may be rechargeable at a high voltage or may be suitable for being driven at a high voltage. For example, the upper charging limit voltage of a rechargeable lithium battery may be, at least, about 3 volt (V), or about 3 V to about 5 V, about 3 V to about 4.8 V, about 3.2 V to about 4.8 V, about 3.5 V to about 4.8 V, about 4 V to about 4.8 V, about 4.3 V to about 4.8 V, about 4.4 V to about 4.8 V, about 4.5 V to about 4.7 V, and/or the like.

The battery may have a theoretical capacity of at least about 180 milliampere hour per gram (mAh/g), e.g., about 180 mAh/g to about 270 mAh/g, about 200 mAh/g to about 260 mAh/g, or about 220 mAh/g to about 250 mAh/g.

Use of the cathode active material in a high voltage battery may improve stability and cycle-life characteristics while maximizing or increasing charge capacity and energy density.

### Anode

The anode may include a current collector and an anode active material layer on the current collector, and the anode active material layer may include an anode active material, and may further include a binder, an electrically conductive material, and/or a (e.g., any suitable) combination thereof.

### Anode Active Material

The anode active material may include a material that reversibly intercalates/deintercalates lithium ions, a lithium metal, a lithium metal alloy, a material capable of doping/dedoping lithium, and/or transition metal oxide.

The material that reversibly intercalates/deintercalates lithium ions may include, for example, crystalline carbon, amorphous carbon, and/or a (e.g., any suitable) combination thereof as a carbon-based anode active material. The crystalline carbon may be irregular, or sheet, flake, spherical, or fiber shaped (e.g., in a form of fibers) and may be or include natural graphite and/or artificial graphite. The amorphous carbon may be a soft carbon, a hard carbon, a mesophase pitch carbonization product, calcined coke, and/or the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based anode active material and/or a Sn-based anode active material. The Si-based anode active material may include silicon, a silicon-carbon composite, SiOx (0 < x ≤ 2), a Si-Q alloy (wherein Q is an element selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and/or a (e.g., any suitable)combination thereof), and/or a (e.g., any suitable) combination thereof. The Sn-based anode active material may be Sn, SnO₂, SnOx (0 < x < 2), a Sn alloy, and/or a (e.g., any suitable) combination thereof.

The silicon-carbon composite may be a composite of silicon and amorphous carbon. An average particle diameter (D₅₀) of the silicon-carbon composite particles may be, for example, about 0.5 µm to about 20 µm. According to one or more embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, and/or a (e.g., any suitable) combination thereof. The amorphous carbon may include soft carbon and/or hard carbon, a mesophase pitch carbonized product, and/or calcined coke.

If the silicon-carbon composite includes silicon and amorphous carbon, a content (e.g., amount) of silicon may be about 10 wt% to about 50 wt% and a content (e.g., amount) of amorphous carbon may be about 50 wt% to about 90 wt% based on 100 wt% of the silicon-carbon composite. In some embodiments, if the composite includes silicon, amorphous carbon, and crystalline carbon, a content (e.g., amount) of silicon may be about 10 wt% to about 50 wt%, a content (e.g., amount) of crystalline carbon may be about 10 wt% to about 70 wt%, and a content (e.g., amount) of amorphous carbon may be about 20 wt% to about 40 wt% based on 100 wt% of the silicon-carbon composite.

In embodiments, a thickness of the amorphous carbon coating layer may be about 5 nanometer (nm) to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, and/or in an oxidized form. The oxidized form of silicon may be represented by SiOₓ (0<x≤2). At this time, the atomic content (e.g., amount) ratio of Si:O, which indicates a degree of oxidation, may be about 99:1 to about 33:67. As used herein, if (e.g., when) a definition is not otherwise provided, an average particle diameter (D₅₀) indicates a diameter of particle where an accumulated volume is about 50 volume% in a particle size distribution.

The Si-based anode active material and/or Sn-based anode active material may be mixed with the carbon-based anode active material. If the Si-based anode active material and/or Sn-based anode active material and the carbon-based anode active material are mixed and used, the mixing ratio may be a weight ratio of about 1:99 to about 90:10.

### Binder

The binder serves to well adhere the anode active material particles to each other and also to adhere the anode active material to the current collector. The binder may be a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

If an aqueous binder is used as the anode binder, a cellulose-based compound capable of imparting or increasing viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiberized, and may be, for example, polytetrafluoroethylene, polyvinylidene fluoride, a polyvinylidene fluoride-hexafluoropropylene copolymer, polyethylene oxide, and/or a (e.g., any suitable) combination thereof.

### Conductive Material

The conductive material is included to provide electrode conductivity (e.g., electrical conductivity) and any suitable electrically conductive material may be used as a conductive material unless it causes an undesirable chemical change in the rechargeable lithium battery. Examples of the conductive material include a carbon-based material such as natural graphite, artificial graphite, carbon black, acetylene black, ketjen black, a carbon fiber, a carbon nanofiber, a carbon nanotube, and/or the like; a metal-based material of a metal powder and/or a metal fiber including copper, nickel, aluminum silver, and/or the like; an electrically conductive polymer such as a polyphenylene derivative; and/or a (e.g., any suitable) mixture thereof.

A content (e.g., amount) of the anode active material may be about 95 wt% to about 99.5 wt% based on 100 wt% of the anode active material layer, and a content (e.g., amount) of the binder may be about 0.5 wt% to about 5 wt% based on 100 wt% of the anode active material layer. For example, the anode active material layer may include about 90 wt% to about 99 wt% of the anode active material, about 0.5 wt% to about 5 wt% of the binder, and about 0.5 wt% to about 5 wt% of the conductive material.

### Anode Current Collector

The anode current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and/or an alloy thereof, and may be in the form of a foil, sheet, and/or foam. A thickness of the anode current collector may be, for example, about 1 µm to about 20 µm, about 5 µm to about 15 µm, or about 7 µm to about 10 µm.

### Electrolyte

In one or more embodiments, the electrolyte may be an electrolyte solution or a solid electrolyte. For example, the electrolyte may be an electrolyte solution for use in a rechargeable lithium battery and electrolyte solution may include a non-aqueous organic solvent and a lithium salt. In some embodiments, the electrolyte may be a solid electrolyte for use in a solid-state (e.g., all-solid) rechargeable lithium battery.

The non-aqueous organic solvent serves as a medium that transmits ions taking part in the electrochemical reaction of a battery. The non-aqueous organic solvent may be a carbonate-based, ester-based, ether-based, ketone-based, and/or alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, t-butyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In some embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, and may include a double bond, an aromatic ring, or an ether group, and/or the like); amides such as dimethylformamide; dioxolanes such as 1,3-dioxolane, 1,4-dioxolane, and/or the like; sulfolanes, and/or the like.

The non-aqueous organic solvent may be used alone or in a mixture of two or more types (kinds), and if two or more kinds are used in a mixture, a mixing ratio may be appropriately or suitably adjusted according to the desired or suitable battery performance.

If using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinylethylene carbonate, vinylene carbonate, and/or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between cathodes and anodes. Examples of the lithium salt may include at least one selected from among LiPF₆, LiBF₄, LiSbF₆, LiAsF₆, LiClO₄, LiAlO₂, LiAlCl₄, LiPO₂F₂, LiCl, Lil, LiN(SO₂C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFOB), and lithium bis(oxalato) borate (LiBOB).

A concentration of lithium salt may be within the range of about 0.1 M to about 2.0 M. If the concentration of lithium salt is within the described range, the electrolyte solution has appropriate or suitable ionic conductivity and viscosity, and thus excellent or suitable performance may be achieved and lithium ions may move effectively.

The solid electrolyte may include any material suitable for use as an ion conductive material, non-limiting examples of which include an inorganic solid electrolyte, a crystalline solid electrolyte, an amorphous solid electrolyte, or a combination thereof. The solid electrolyte may be, for example, a sulfide-based solid electrolyte, an oxide-based solid electrolyte, or a combination thereof. The sulfide-based solid electrolyte may include, for example, Li, S, and P and may optionally further include a halogen element. The sulfide-based solid electrolyte may be selected from sulfide-based solid electrolytes utilized in an electrolyte layer. For example, the sulfide-based solid electrolyte may have an ionic conductivity of at least about 1×10⁻⁵ siemens per centimeter (S/cm) at room temperature. The oxide-based solid electrolyte may include, for example, Li, O, and a transition metal element and may optionally further include other elements. For example, the oxide-based solid electrolyte may be a solid electrolyte having an ionic conductivity of at least about 1×10⁻⁵ S/cm at room temperature. The oxide-based solid electrolyte may be selected from oxide-based solid electrolytes suitable for use in an electrolyte layer.

### Separator

Depending on the kind of the rechargeable lithium battery, a separator may be present between the cathode and the anode. The separator may include polyethylene, polypropylene, polyvinylidene fluoride, a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, and/or a (e.g., any suitable) combination thereof on one or both surfaces (e.g., opposite surfaces) of the porous substrate.

The porous substrate may be a polymer film formed of any one polymer selected from among polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, TEFLON, polytetrafluoroethylene, or a copolymer or mixture of two or more thereof. The porous substrate may include glass fibers, or may be a film comprising a mixture of the polymer and the glass fibers.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and/or a (e.g., any suitable) combination thereof, but the present disclosure is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

### Methods of Operating a Rechargeable Lithium Battery

Methods of operating a rechargeable lithium battery according to one or more embodiments, may include the act or task of generating lattice strain in the core of the cathode active material and transferring the lattice strain to the piezoelectric composition. For example, the lattice strain may be generated in the nickel composite oxide, and may be generated during charging the battery and/or during discharging the battery. The methods may include the act or task of inducing an electric field to inhibit oxygen from exiting the core. The oxygen that is inhibited from exiting the core may include oxide anion (O²⁻), oxidized oxide Oα having a charge "α" that is less negative than -2, peroxide anion, superoxide anion, peroxide-like anions, superoxide-like anions, or a combination thereof. For example, electrical charge of the electric field may prevent, suppress, or reduce movement of the oxygen to outside (e.g., beyond) a grain boundary (e.g., surface) of the nickel composite oxide such that the release (e.g., loss) of the lattice oxygen from the interior of the nickel composite oxide may be prevented, suppressed or reduced. In embodiments of the present disclosure, movement or release of the oxygen (e.g., lattice oxygen) from the core of the cathode active material may be inhibited, prevented, or suppressed .

In one or more embodiments, an amount of oxygen released from the battery during operating the battery may be at least about 50% less than an amount of oxygen released during operating a comparable battery including a cathode active material that excludes the piezoelectric composition of the present disclosure. For example, the amount of oxygen released may be about 50% to about 99%, about 50% to about 95%, about 50% to about 90%, about 50% to about 80%, about 50% to about 70%, about 50% to about 60%, about 60% to about 95%, about 60% to about 90%, about 60% to about 80%, about 60% to about 70%, about 70% to about 95%, about 70% to about 90%, about 70% to about 85%, about 70% to about 80%, about 80% to about 95%, about 80% to about 90%, about 85% to about 95%, or about 85% to about 90% less than the amount of oxygen released during operating the comparable battery as described herein. For example, the amount of oxygen as described herein may be released from the battery, the cathode active material thereof, and/or the nickel composite oxide thereof, and may be released during charging the battery and/or during discharging the battery.

The methods may include charging the battery to an upper limit voltage of at least about 3 V. For example, the upper limit voltage may be about 3 V to about 4.8 V, about 3 V to about 4.7 V, about 3.1 V to about 4.6 V, about 3.2 V to about 4.5 V, or about 3.3 V to about 4.45 V. The method may include the act or task of operating the battery between about 2.5 V and about 4.8 V, e.g., about 3 V to about 4.7 V, about 3 V to about 4.5 V, about 3.2 V to about 4.8 V, or about 3.5 V to about 4.8 V.

The methods may include the act or task of operating the battery at a rate of about 0.2 C to about 10 C, e.g., about 0.5 C to about 10 C, about 1 C to about 8 C, about 1 C to about 7 C, about 1 C to about 6 C, about 1 C to about 5 C, about 1 C to about 4 C, about 1 C to about 3 C, about 1 C to about 2 C, about 2 C to about 8 C, about 2 C to about 6 C, about 2 C to about 5 C, about 2 C to about 4 C, about 2 C to about 3 C, about 3 C to about 8 C, about 3 C to about 7 C, about 3 C to about 6 C, about 3 C to about 5 C, or about 3 C to about 4 C.

The methods may include the act or task of operating the battery for at least about 50 charge-discharge cycles. For example, a total number of charge-discharge cycles of operating the battery may be about 50 to about 1000, about 50 to about 800, about 50 to about 700, about 50 to about 500, about 50 to about 400, about 50 to about 300, about 50 to about 200, about 50 to about 100, about 100 to about 500, about 100 to about 400, about 100 to about 300, about 100 to about 200, about 150 to about 500, about 150 to about 400, about 150 to about 300, about 150 to about 200, about 200 to about 500, about 200 to about 400, or about 200 to about 300.

The methods of operating the battery may include achieving or realizing a capacity retention of at least about 60%. The term "capacity retention" as used herein refers a percentage of a charge capacity of the battery after being operated at a voltage range, a rate range, and a total number of charge-discharge cycles as described herein to the battery's initial charge capacity before being operated. For example, operating the battery may obtain, achieve or realize a capacity retention of about 65% to about 99%, about 70% to about 95%, about 70% to about 90%, about 70% to about 85%, about 70% to about 80%, about 70% to about 75%, about 75% to about 95%, about 75% to about 90%, about 75% to about 85%, about 75% to about 80%, about 80% to about 95%, about 80% to about 90%, about 80% to about 85%, about 85% to about 95%, or about 85% to about 90%. In one or more embodiments, the capacity retention may be about 75% to 95% after operating the battery at a rate of about 3 C to about 5 C, and after about 100 cycles to about 500 cycles. In one or more embodiments, the capacity retention may be about 70% to 95% after operating the battery at about 2.5 V to about 4.8 V, at a rate of about 1 C to about 3 C, and after about 50 cycles to about 300 cycles.

### Example 1

Nickel sulfate (NiSO₄·6H₂O), cobalt sulfate (CoSO₄·7H₂O), and sodium aluminum sulfate (NaAl(SO₄)₂·12H₂O) were added to distilled water in a molar ratio of 91:7:2. An ammonia solution (NH₄OH) was added as a precipitating agent and the mixture was stirred at 50°C for 18 hours to carry out a coprecipitation reaction. Through this, a precursor nickel-based hydroxide (Ni_{0.91}Co_{0.07}Al_{0.02}(OH)₂) was obtained.

The precursor and LiOH were mixed so that the molar ratio Li:(Ni+Co+Al) was 1.03:1, and the mixture was calcined at 730°C for 8 hours in an oxygen atmosphere. Through this, an unwashed oxide (Li_{1.03}Ni_{0.91}Co_{0.07}Al_{0.02}O₂) was obtained.

The unwashed oxide and gallium oxide (Ga₂O₃) were mixed and heat-treated at approximately 550°C for 6 hours. Through this, a positive electrode active material comprising a core containing the nickel composite oxide and a shell containing the piezoelectric composition LiGaO₂ was produced.

Referring to Satoshi Nanamatsu et al., Japanese Journal of Applied Physics, Volume 11, Number 6, pages 816 to 822, the piezoelectric modulus tensor (*d*₃₃) of LiGaO₂ is 8.6 pC/N, and the elastic tensor (*c*₃₃) is 140 GPa.

### Comparative Example 1

Except for not introducing the shell, the positive electrode active material was prepared in the same manner as in Example 1. That is, after washing the unwashed oxide of Example 1, it was heat-treated at about 550 °C for 6 hours to prepare the positive electrode active material according to Comparative Example 1.

### Experimental Example 1: High-Temperature Gas Generation

Positive electrode compositions were prepared by mixing 98.5 wt% of the positive electrode active materials prepared in each of Example 1 and Comparative Example 1, 1.0 wt% PVdF binder, and 0.5 wt% carbon nanotube conductive additive. The mixture was coated onto an aluminum foil current collector, then dried and rolled to fabricate positive electrodes.

A coin-type cell was assembled by inserting this positive electrode and a lithium metal counter electrode into a cell case with a polytetrafluoroethylene separator, and injecting an electrolyte obtained by dissolving 1 M LiPF₆ in a solvent mixture of ethylene carbonate and dimethyl carbonate (volume ratio 3:7), following conventional procedures.

The coin cells of Example 1 and Comparative Example 1 were aged at 90 °C for 24 hours, the weight difference between the cells before and after aging was determined and converted into volume to quantify the amount of gas generated. The results are shown in Table 1 below. In Table 1, the gas generation amount represents the gas volume per weight of positive electrode active materials.

**(Table 1)**

| | Example 1 | Comparative Example 1 |
|---|---|---|
| Gas generation (90°C, 24h) | 1.2 cc/g | 2.0 cc/g |

Referring to Table 1, when the positive electrode active material according to some embodiments was applied, gas generation at high temperature was reduced by 40%.

Terms such as "substantially", "about", and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or ± 30%, 20%, 10%, 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, for example, 2.4 to 7.6. Applicant therefore reserves the right to amend this specification, including the claims, to expressly recite any sub-range subsumed within the ranges expressly recited herein.

A battery management system (BMS) device, and/or any other relevant devices or components according to embodiments of the present disclosure described herein may be implemented utilizing any suitable hardware, firmware (e.g., an application-specific integrated circuit), software, or a combination of software, firmware, and hardware. For example, the components of the device may be formed on one integrated circuit (IC) chip or on separate IC chips. Further, the components of the device may be implemented on a flexible printed circuit film, a tape carrier package (TCP), or a printed circuit board (PCB), or formed on one substrate. Further, the components of the device may be a process or thread, running on one or more processors, in one or more computing devices, executing computer program instructions and interacting with other system components for performing the functionalities described herein. The computer program instructions are stored in a memory which may be implemented in a computing device using a standard memory device, for example, a random access memory (RAM). The computer program instructions may also be stored in other non-transitory computer readable media such as, for example, a CD-ROM, flash drive, and/or the like. Also, a person of skill in the art should recognize that the functionality of computing devices may be combined or integrated into a single computing device, or the functionality of a particular computing device may be distributed across one or more other computing devices without departing from the scope of the present disclosure.

Example embodiments of the present disclosure have been described, but the present disclosure is not limited thereto. One or more suitable other modifications may be implemented within the scope of the claims, the detailed description of the present disclosure, and the appended drawings, and are also included in the scope of the present disclosure. Accordingly, any modified embodiments may not be understood separately from the technical ideas and aspects of the present disclosure, and the modified embodiments are within the scope of the appended claims and equivalents thereof.

### Reference Numerals

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A cathode active material comprising:
a core and a shell on the core,
the core comprising a nickel composite oxide having at least 60 mol% of nickel, based on a total mols of metals in the nickel composite oxide excluding Li, and the shell comprising a piezoelectric composition having a piezoelectric modulus tensor of at least 2 picocoulomb per newton (pC/N),
wherein the cathode active material is a piezoelectrical Ni-rich cathode active material.

2. The cathode active material as claimed in claim 1, wherein the piezoelectric composition has an elastic tensor of at least 10 gigapascal (GPa)
and/or
the piezoelectric composition is crystalline, ceramic, or polymeric, and comprises metal composite oxides, metal compounds, organic polymers, or combinations thereof
and/or
the piezoelectric composition comprises Li, K, Al, Ga, Nb, Pb, Sc, Ta, Ti, W, Zn, Zr, or a combination thereof, wherein, preferably,
the piezoelectric composition comprises LiGaO₃, LiNbO₃, LiTaO₃, LiIO₃, GaPO₄, KNbO₃, NaWO₃, NbTiO₃, BaTiO₃, PbTiO₃, ZnO, GaN, AIN, lead zirconate titanate (PZT), bismuth-based perovskite solid solution (BSPT), or a combination thereof.

3. The cathode active material as claimed in claim 1 or claim 2, wherein the nickel composite oxide is represented by Chemical Formula 1:
**Chemical Formula 1** Liₐ₁Niₓ₁M¹_{y1}M²_{z1}M³_{w1}O_{2-b1}X_{b1}
M¹, M² and M³ are each independently selected from among Al, B, Ba, Ca, Ce, Co, Cr, Cu, Fe, Mg, Mn, Mo, Nb, Si, Sn, Sr, Ti, V, W, and Zr,
X is at least one element selected from among F, P, and S,
0.9≤a1≤1.2, 0.6≤x1≤0.99, 0≤y1≤0.2, 0≤z1≤0.05, 0≤w1≤0.05, 0.9≤x1+y1+z1+w1≤1.1, and 0≤b1≤0.1.

4. The cathode active material as claimed in any one of claims 1-3, wherein the core comprises particles, wherein an average particle diameter of the particles is 20 nanometer (nm) to 2 micrometer (µm)
and/or
the shell comprises a coating, wherein a thickness of the coating is 0.5 nm to 100 nm
and/or
an amount of the core is 50 wt% to 99.5 wt%, and an amount of the shell is 0.5 wt% to 50 wt%, based on a total weight of the cathode active material.

5. The cathode active material as claimed in any one of claims 1-4, wherein a weight ratio of the shell to the core is 1:200 to 1:1.

6. A method comprising:
a) providing a piezoelectric adduct to a Ni-rich composite oxide to form an intermediate; and
b) heat treating the intermediate to form a coating on the Ni-rich composite oxide, the coating comprising a piezoelectric composition,
wherein the method is a method of manufacturing a piezoelectrical Ni-rich cathode active material.

7. The method as claimed in claim 6, wherein the Ni-rich composite oxide is an unwashed oxide having a surface comprising a lithium residue,
wherein providing the piezoelectric adduct to the Ni-rich composite oxide to form the intermediate comprises:
a) providing the unwashed oxide; and
b) forming the intermediate from the piezoelectric adduct and the unwashed oxide, and
wherein providing the unwashed oxide comprises:
a.1) heat treating a composite oxide precursor and excluding washing to form the unwashed oxide, or
a.2) providing a pre-formed composite oxide and excluding washing.

8. The method as claimed in claim 6 or claim 7, wherein the piezoelectric adduct comprises an oxide of Ga, Nb, Ta, I, W, Sc, Ti, Zn, Zr, or a combination thereof.

9. The method as claimed in any one of claims 6-8, wherein the piezoelectric adduct comprises gallium oxide, niobium oxide, tantalum oxide, periodate, iodate, or a combination thereof.

10. The method as claimed in any one of claims 6-9, wherein the intermediate is heat treated at a temperature of 400 °C to 900 °C, and for 2 hours to 48 hours.

11. A battery comprising:
a positive electrode comprising the cathode active material of any one of claims 1-10;
a negative electrode; and
an electrolyte between the positive electrode and the negative electrode.

12. A method of operating the battery as claimed in claim 11 comprising:
generating lattice strain in the core and transferring the lattice strain to the piezoelectric composition; and
inducing an electric field to inhibit oxygen from exiting the core.

13. The method as claimed in claim 11 or claim 12, wherein the method comprises operating the battery between 2.5 volt (V) and 4.8 V, and at a rate of 0.2 C to 10 C, and
wherein an amount of oxygen released from the battery is at least 50% less than an amount of oxygen released during operating a battery including a cathode active material that excludes the piezoelectric composition.

14. The method as claimed in any one of claims 11-13, wherein the method comprises operating the battery for 100 cycles to 500 cycles, and
wherein a capacity retention of the battery is at least 75%.

15. The method as claimed in any one of claims 11-14, wherein the method comprises operating the battery between 2.5 V and 4.8 V for 50 cycles to 300 cycles, and
wherein a capacity retention of the battery is 75% to 95%.
